# EUROPEAN PATENT APPLICATION

(11) **EP 3 389 287 A1**
(43) Date of publication of application: **17.10.2018**
(21) Application number: 16880761.8
(22) Date of filing: 28.10.2016
(51) Int. Cl.: H04W 4/00, H04W 40/24, H04W 76/02

(54) **NEAR FIELD COMMUNICATION METHOD AND MOBILE TERMINAL**

(30) Priority: 31.12.2015 CN 201511030631
(71) Applicant: Huawei Technologies Co., Ltd., Longgang District Shenzhen, Guangdong 518129 (CN)
(72) Inventor: PAN, Shilin, Shenzhen Guangdong 518129 (CN); LU, Zhihua, Shenzhen Guangdong 518129 (CN); XIN, Guizhen, Shenzhen Guangdong 518129 (CN)
(74) Representative: Körber, Martin Hans
(86) International application number: PCT/CN2016/103747
(87) International publication number: WO 2017/113970

(57) **Abstract**

Embodiments of the present invention disclose a near field communication method and a mobile terminal. An AID routing table is stored in a storage space corresponding to a security mode of an AP, and the AID routing table includes a one-to-one correspondence between at least one AID and at least one destination address. After receiving an AID selection command that is used for initiating an NFC service and that is sent by an NFC controller, the AP parses the AID selection command to obtain a target AID. Then, the AP searches the AID routing table to obtain a first destination address corresponding to the target AID. If an object corresponding to the first destination address is an SE, the AP establishes a first link between the AP and the SE. The AP sends, to the SE, all subsequently received service data that belongs to the same NFC service as the AID selection command, until the AP receives a new AID selection command. In this near field communication method, the AP directly sends the NFC service data to the SE, and therefore the SE does not need to support an SWP protocol. This reduces complexity and costs of an NFC service framework of the mobile terminal.

## Description

This application claims priority to Chinese Patent Application No. 201511030631.9, filed with the Chinese Patent Office on December 31, 2015, and entitled "NEAR FIELD COMMUNICATION METHOD AND MOBILE TERMINAL", which is incorporated herein by reference in its entirety.

### TECHNICAL FIELD

The present invention relates to the field of computer technologies, and in particular, to a near field communication method and a mobile terminal.

### BACKGROUND

Near field communication (Near Field Communication, NFC) is a short-range high-frequency radio technology that evolves from RFID (Radio Frequency Identification, radio frequency identification). In the NFC, an operating frequency is 13.56 Hz, a valid range is within 20 cm, and there are three transmission speeds: 106 kbit/s, 212 kbit/s, and 424 kbit/s. There are three operating modes in the NFC: a card reader mode, a point-to-point mode, and a card emulation mode. In the card reader mode, an NFC device generates a radio frequency field and reads/writes data from/to an external NFC tag that uses a same standard as that of the NFC device. In the point-to-point mode, an NFC device can communicate with another NFC device for point-to-point data transmission. In the card emulation mode, a card reader is an active device that generates a radio frequency field, and an NFC device is a passive device that simulates a non-contact card compliant with an NFC standard to interact with the card reader.

More mobile terminals support an NFC communication function, that is, the mobile terminals can implement a function such as card swiping or payment. Currently, the mobile terminals implement the function in the following three manners: an SD card (Secure Digital Memory Card, secure digital memory card) scheme, a SIM (Subscriber Identity Module, subscriber identity module) card scheme, and an all-terminal scheme.

The following uses the all-terminal payment scheme as an example to describe an NFC data exchange process.

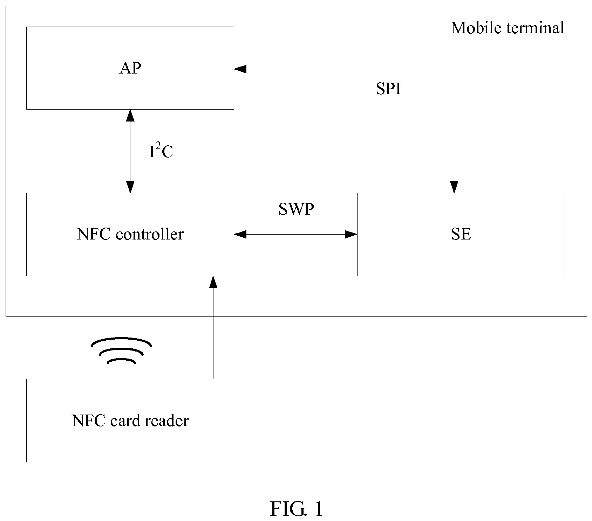

FIG. 1 is a schematic diagram of a system framework for implementing near field communication in the prior art. As shown in FIG. 1, a mobile terminal includes an AP (Application Processor, application processor), an NFC controller, and an SE (Secure Element, secure element). The AP and the NFC controller are coupled by using an I²C bus, the NFC controller and the SE module are coupled by using an SWP (Single Wire Protocol, single wire protocol) bus, and the AP and the SE module are coupled by using an SPI (Serial Peripheral Interface, serial peripheral interface) bus.

On the NFC controller, an AID (application identifier) routing table is configured. A table entry includes an AID and a target object. The AID is an application identifier, and includes a registered application provider identifier (RID) and a proprietary application identifier extension (PIX). Therefore, one application is corresponding to one AID. The target object may be the SE module that is coupled to the AP.

After an NFC card reader sends a "Select AID" instruction, the NFC controller receives the instruction, parses out an AID in the instruction, and searches the AID routing table to obtain a target object corresponding to the AID. If the target object is the SE, the NFC controller needs to send received service data to the SE by using an SWP interface.

However, implementation of an SWP software protocol stack is relatively complex. Therefore, if the SE supports the SWP protocol, a process of enabling the SE to support the SWP protocol is quite complex and costs are very high.

### SUMMARY

Embodiments of the present invention provide a near field communication method and a mobile terminal, so as to reduce complexity and costs of a mobile terminal.

To resolve the foregoing technical problem, the embodiments of the present invention disclose the following technical solutions:
According to a first aspect, the present invention provides a near field communication method, where the method is applied to a mobile terminal, and the mobile terminal includes: an application processor AP, a near field communication NFC controller, and a secure element SE, where the NFC controller is coupled to the AP, the SE is coupled to the AP, and an operating mode of the AP includes a security mode; and the method includes: receiving, by the NFC controller, an AID selection command that is used for initiating an NFC service, and forwarding the AID selection command to the AP, where the AID selection command carries a target AID; parsing, by the AP, the AID selection command, to obtain the target AID; searching an AID routing table prestored in a storage space corresponding to the security mode of the AP, to obtain a first destination address corresponding to the target AID, where the AID routing table includes a one-to-one correspondence between at least one AID and at least one destination address; when an object corresponding to the first destination address is the SE, establishing, by the AP, a first link between the AP and the SE; receiving, by the NFC controller, at least one piece of service data corresponding to the NFC service, and sending the at least one piece of service data to the AP; and sending, by the AP, the at least one piece of service data to the SE by using the first link.

In the near field communication method provided in the first aspect, the AID routing table is stored in a storage space that is accessible by the AP in the security mode, and the AID routing table includes a one-to-one correspondence between an AID and a destination address. When the AP leans, by searching the AID routing table, that the first destination address corresponding to the target AID carried in the AID selection command is an SE address, the AP directly sends the AID selection command to the SE, and sends all subsequent service data of the NFC service corresponding to the AID selection command to the SE. In this way, the service data is not sent by the NFC controller to the SE, and the SE does not need to support an SWP protocol. This reduces complexity and costs of an NFC service framework of the mobile terminal.

With reference to the first aspect, in a first possible implementation of the first aspect, if the SE and the AP are integrated on a system-on-a-chip, the establishing, by the AP, a first link between the AP and the SE specifically includes: establishing, by the AP, the first link, based on an interprocess communication IPC bus.

With reference to the first aspect, in a second possible implementation of the first aspect, if the SE and the AP are not integrated on a system-on-a-chip, the establishing, by the AP, a first link between the AP and the SE specifically includes: establishing, by the AP, the first link, based on a serial peripheral interface SPI bus.

With reference to the first aspect, in a third possible implementation of the first aspect, the mobile terminal further includes a subscriber identity module SIM card, and if the object corresponding to the first destination address is the SIM card, the AP establishes a second link between the AP and the SIM card, and sends the at least one piece of service data to the SIM card by using the second link.

With reference to the first aspect, in a fourth possible implementation of the first aspect, the mobile terminal further includes a secure digital SD card, and the method further includes: if the object corresponding to the first destination address is the SD card, establishing, by the AP, a third link between the AP and the SD card, and sending the at least one piece of service data to the SD card by using the third link.

With reference to the first aspect, in a fifth possible implementation of the first aspect, the operating mode of the AP further includes an insecurity mode, and the method further includes: if the object corresponding to the first destination address is an NFC card emulation application program when the AP runs in the insecurity mode, establishing, by the AP, a fourth link between the AP and the NFC card emulation application, and sending the at least one piece of service data to the NFC card emulation application program by using the fourth link.

According to a second aspect, the present invention further provides a system-on-a-chip, which is applied to a mobile terminal including a near field communication NFC controller and a secure element SE. The system-on-a-chip includes an application processor AP, and an operating mode of the AP includes a security mode. The AP receives an AID selection command that is used for initiating an NFC service and that is forwarded by the NFC controller, where the AID selection command carries a target AID. The AP parses the AID selection command to obtain the target AID, and searches an AID routing table prestored in a storage space corresponding to the security mode of the AP, to obtain a first destination address corresponding to the target AID, where the AID routing table includes a one-to-one correspondence between at least one AID and at least one destination address. When an object corresponding to the first destination address is the SE, the AP establishes a first link between the AP and the SE. The AP receives at least one piece of service data that is corresponding to the NFC service and that is forwarded by the NFC controller, and sends the at least one piece of service data to the SE by using the first link.

According to a third aspect, the present invention further provides another system-on-a-chip, which is applied to a mobile terminal including a near field communication NFC controller. The system-on-a-chip includes an application processor AP and a secure element SE, and an operating mode of the AP includes a security mode. The AP receives an AID selection command that is used for initiating an NFC service and that is forwarded by the NFC controller, where the AID selection command carries a target AID. The AP parses the AID selection command to obtain the target AID, and searches an AID routing table prestored in a storage space corresponding to the security mode of the AP, to obtain a first destination address corresponding to the target AID, where the AID routing table includes a one-to-one correspondence between at least one AID and at least one destination address. When an object corresponding to the first destination address is the SE, the AP establishes a first link between the AP and the SE. Then, the AP receives at least one piece of service data that is corresponding to the NFC service and that is forwarded by the NFC controller, and sends the at least one piece of service data to the SE by using the first link.

According to a fourth aspect, the present invention further provides a mobile terminal, including an application processor AP, a near field communication NFC controller, and a secure element SE, where an operating mode of the AP includes a security mode, an application identifier AID routing table is prestored in a storage space corresponding to the security mode of the AP, and the AID routing table includes a one-to-one correspondence between at least one AID and at least one destination address; the NFC controller is configured to execute a method procedure related to the NFC controller in the near field communication method provided in the first aspect; and the AP is configured to execute a method procedure related to the AP in the near field communication method provided in the first aspect.

As can be learned from the foregoing technical solutions, in the near field communication method according to the embodiments of the present invention, the AID routing table is stored in the storage space corresponding to the security mode of the AP, and the AID routing table includes the one-to-one correspondence between at least one AID and at least one destination address. When receiving the AID selection command that contains the target AID and that is sent by the NFC controller, the AP parses the AID selection command to obtain the target AID. Then, the AP searches the AID routing table to obtain the first destination address corresponding to the target AID. If the object corresponding to the first destination address is the SE, the AP establishes the first link between the AP and the SE. The AP sends all the subsequently received service data corresponding to the NFC service to the SE, until the AP receives a new AID selection command. In the near field communication method provided in the present invention, when an object that is corresponding to a destination address and that is obtained by the AP by searching the AID routing table is the SE, the AP directly sends the service data of the NFC service to the SE. In this way, the service data is not forwarded to the SE by the NFC controller, and an SWP interface and an SWP communication line do not need to be disposed between the SE and the NFC controller, that is, the SE does not need to support the SWP protocol. This reduces complexity and costs of an NFC service framework of the mobile terminal.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, a person of ordinary skill in the art may still derive other drawings from these accompanying drawings without creative efforts.
FIG. 1 is a schematic diagram of a system framework used for near field communication in the prior art;
FIG. 2 is a schematic diagram of a system framework used for near field communication according to an embodiment of the present invention;
FIG. 3 is a flowchart of a near field communication method applied to a system shown in FIG. 2 according to an embodiment of the present invention;
FIG. 4 is a schematic framework diagram of a mobile terminal according to an embodiment of the present invention;
FIG. 5 is a schematic framework diagram of another mobile terminal according to an embodiment of the present invention;
FIG. 6 is a schematic framework diagram of still another mobile terminal according to an embodiment of the present invention;
FIG. 7 is a schematic framework diagram of still another mobile terminal according to an embodiment of the present invention; and
FIG. 8 is a schematic framework diagram of still another mobile terminal according to an embodiment of the present invention.

### DESCRIPTION OF EMBODIMENTS

To make a person skilled in the art understand the technical solutions in the present invention better, the following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

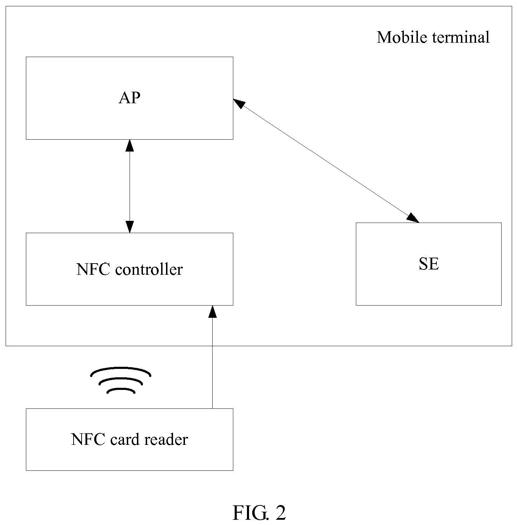

Referring to FIG. 2, FIG. 2 is a schematic diagram of a system framework used for near field communication according to an embodiment of the present invention. This system framework includes a mobile terminal and an NFC card reader. The mobile terminal includes but is not limited to a product form such as a smartphone or a tablet computer.

The mobile terminal includes an AP, an NFC controller, and an SE. An operating mode of the AP includes a security mode, which is referred to as a TEE (TEE, Trust Execute Environment, trusted execution environment). The AP is coupled to the SE, and the AP may be coupled to the NFC controller by using an I²C bus.

An AID routing table is stored in a storage space corresponding to the security mode (TEE) of the AP, so that security of the AID routing table can be ensured. The AID routing table includes a one-to-one correspondence between at least one AID and at least one destination address.

When the mobile terminal is in contact with the NFC card reader (for example, a bus card reader or a company's card swipe machine) to implement an NFC non-contact service, the NFC card reader sends a "Select AID" AID selection command. "Select AID" is a command header, and a data field that includes a value corresponding to an AID follows the command header. The service data may be encapsulated into an APDU (Application Protocol Data Unit, application protocol data unit) data form for transmission. An APDU is an information transmission unit between a smart card and a smart card reader.

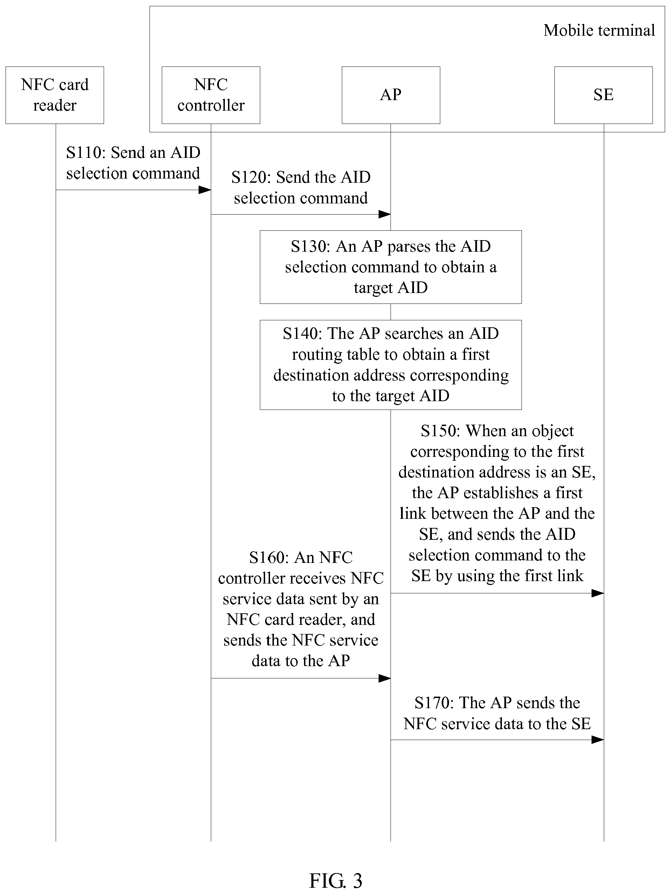

Referring to FIG. 3, FIG. 3 is a flowchart of a near field communication method applied to a system shown in FIG. 2 according to an embodiment of the present invention. As shown in FIG. 3, the method may include the following steps.

S110: An NFC card reader sends an AID selection command for initiating an NFC service to an NFC controller, where the AID selection command includes a target AID.

S120: The NFC controller sends the AID selection command to an AP.

In an implementation of the present invention, the NFC controller sends the AID selection command to the AP by using an I²C bus.

S130: The AP parses the AID selection command to obtain the target AID.

The AP running in a security mode parses the AID selection command to obtain the target AID carried in the AID selection command.

For example, if the NFC card reader is a bank POS (Point Of Sale, point of sale) card swipe machine that supports the NFC function, the NFC card reader sends one piece of "Select AID" APDU data. An AID in the APDU data is hexadecimal data "325041592E5359532E4444463031", and the hexadecimal data is registered as an AID of an SE.

S140: The AP searches an AID routing table prestored in a storage space corresponding to a security mode of the AP, to obtain a first destination address corresponding to the target AID.

Still using the APDU data sent by the bank POS machine as an example, the AP searches the AID routing table to obtain a first destination address corresponding to the SE.

The storage space corresponding to the security mode of the AP is a storage space that is accessible only when the AP runs in the security mode. The storage space may be an internal buffer space inside the AP, or may be another memory coupled to the AP. A specific form of the storage space is not limited in the present invention.

S150: When an object corresponding to the first destination address is an SE, the AP establishes a first link between the AP and the SE, and sends the AID selection command to the SE by using the first link.

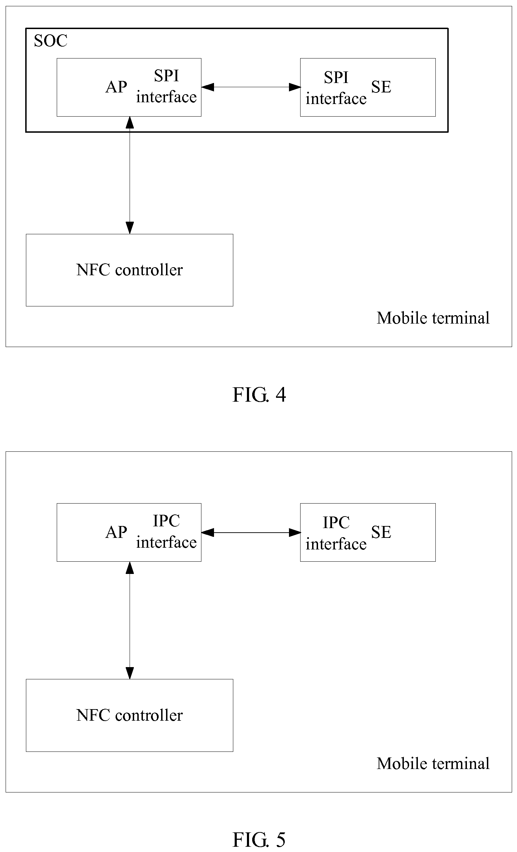

Referring to FIG. 4, FIG. 4 is a schematic framework diagram of a mobile terminal according to an embodiment of the present invention. As shown in FIG. 4, the SE and the AP are integrated on an SoC (System-on-a-Chip, system-on-a-chip), and the AP establishes a first link, based on an interprocess communication (InterProcess Communication, IPC) bus between the AP and the SE. That is, in this application scenario, the AP sends an AID selection command to the SE by using the IPC bus. A person skilled in the art should know that the establishing, by the AP, a first link, based on an IPC bus means implementing communication between the AP and the SE by using the IPC bus and a related interface circuit. Further, because the bus between the AP and the SE has been configured upon production of the mobile terminal, the establishing a first link herein may be construed as activating or enabling the IPC bus between the AP and the SE, so as to implement further service data transmission.

Referring to FIG. 5, FIG. 5 is a schematic framework diagram of another mobile terminal according to an embodiment of the present invention. As shown in FIG. 5, the SE and the AP are not integrated on an SoC, and the AP establishes a first link, based on an SPI (Serial Peripheral Interface, serial peripheral interface) between the AP and the SE. That is, in this application scenario, the AP sends an AID selection command to the SE by using an SPI bus. A person skilled in the art should know that the establishing, by the AP, a first link, based on an SPI bus means implementing communication between the AP and the SE by using the SPI bus and a related interface circuit. Further, because the bus between the AP and the SE has been configured upon production of the mobile terminal, the establishing a first link herein may be construed as activating or enabling the SPI bus between the AP and the SE, so as to implement further service data transmission.

S160: The NFC controller receives at least one piece of service data that is corresponding to the NFC service and that is sent by the NFC card reader, and sends the at least one piece of service data to the AP.

The service data is data received by the NFC controller after the NFC controller receives the AID selection command, and the service data and the AID command constitute a complete NFC service (for example, one card swipe service). There may be one or more pieces of service data.

Still assuming that the NFC card reader is a bank POS card swipe machine, after sending the AID selection command, the NFC card reader sends service data, for example, service data for reading information about a bank card bound to the mobile terminal, and an amount that needs to be paid. All the data is collectively referred to as the service data in the embodiments of the present invention.

S170: The AP sends the service data to the SE by using the first link, until the AP receives a new AID selection command.

The AP forwards, to the SE, all service data received after the AID selection command is received, until the AP receives a new AID selection command. When the AP receives the new AID selection command, it indicates that the NFC service corresponding to a previously received AID selection command is completed, and a new NFC service will be implemented.

In the near field communication method provided in this embodiment, the AID routing table is stored in the storage space that is accessible by the AP in the security mode, and the AID routing table includes the one-to-one correspondence between at least one AID and at least one destination address. After receiving the AID selection command that is used for initiating the NFC service and that is sent by the NFC controller, the AP parses the AID selection command to obtain the target AID. Then, the AP searches the AID routing table to obtain the first destination address corresponding to the target AID. If the object corresponding to the first destination address is the SE, the AP establishes the first link between the AP and the SE. The AP sends, to the SE, all subsequently received service data that belongs to the same NFC service as the AID selection command, until the AP receives a new AID selection command. In the near field communication method provided in the present invention, when an object that is corresponding to a destination address and that is obtained by the AP by searching the AID routing table is the SE, the AP directly sends data of the NFC service to the SE. In this way, the data is not forwarded to the SE by the NFC controller, and an SWP interface and an SWP communication line do not need to be disposed between the SE and the NFC controller, that is, the SE does not need to support the SWP protocol. This reduces complexity and costs of an NFC service framework of the mobile terminal.

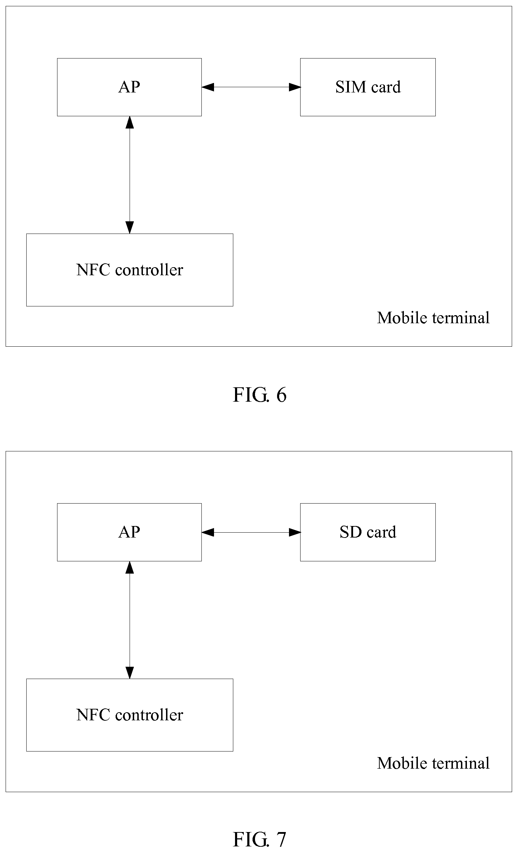

Referring to FIG. 6, FIG. 6 is a schematic framework diagram of still another mobile terminal according to an embodiment of the present invention. This embodiment is applied to an application scenario in which a SIM card in the mobile terminal communicates with an NFC card reader.

The AP parses the AID selection command that is used for the NFC service and that is sent by the NFC controller, to learn that the target AID is the SIM card, and searches the AID routing table prestored in the storage space corresponding to the security mode of the AP, to obtain a second destination address corresponding to the SIM card. Then, the AP establishes a second link between the AP and the SIM card. Then, the AP sends, to the SIM card, all service data that is of the NFC service corresponding to the AID selection command and that is subsequently sent by the NFC controller, until the AP receives a new AID selection command.

The AP establishes the second link, based on a communications bus between the AP and the SIM card. The communications bus between the SIM card and the AP may be a communication between an AP and a SIM card disclosed in the prior art, for example, an SCI (Serial Communication Interface, serial communication interface) bus.

A person skilled in the art should know that the establishing, by the AP, the second link, based on a communications bus between the AP and the SIM card means implementing communication between the AP and the SIM card by using the communications bus and a related interface circuit. Further, because the communications bus between the AP and the SIM card has been configured upon production of the mobile terminal, the establishing the second link herein may be construed as activating or enabling the communications bus between the AP and the SIM card, so as to implement further service data transmission.

According to the mobile terminal provided in this embodiment, after the AP determines that the target AID included in the AID selection command is the SIM card, the AP searches the AID routing table, to obtain the second destination address of the SIM card. The AP establishes the second link between the AP and the SIM card, and sends, to the SIM card, all subsequently received service data by using the second link.

Referring to FIG. 7, FIG. 7 is a schematic framework diagram of still another mobile terminal according to an embodiment of the present invention. This embodiment is applied to an application scenario in which an SD card in the mobile terminal communicates with an NFC card reader.

The AP parses the AID selection command that is used for initiating the NFC service and that is sent by the NFC controller, to learn that the target AID is the SD card, and searches the AID routing table prestored in the storage space corresponding to the security mode, to obtain a third destination address corresponding to the SD card. Then, the AP establishes a third link between the AP and the SD card, and sends the AID selection command to the SD card by using the third link. The AP sends, to the SD card, all subsequently received service data that is sent by the NFC controller, until the AP receives a new AID selection command.

The AP establishes the third link, based on a communications bus between the AP and the SD card, and a communications bus between an AP and an SD card disclosed in the prior art, for example, an I/O bus, may be used.

A person skilled in the art should know that the establishing, by the AP, the third link, based on the communications bus between the AP and the SD card means implementing communication between the AP and the SD card by using the communications bus and a related interface circuit. Further, because the communications bus between the AP and the SD card has been configured upon production of the mobile terminal, the establishing the third link herein may be construed as activating or enabling the communications bus between the AP and the SD card, so as to implement further service data transmission.

According to the mobile terminal provided in this embodiment, after the AP determines that the target AID included in the AID selection command is the SD card, the AP searches the AID routing table, to obtain the destination address of the SD card, and sends, to the SD card by using the third link, all subsequently received service data of the NFC service corresponding to the AID selection command. In addition, in a system framework used for the near field communication according to the present invention, an SWP interface does not need to be disposed between the SE and the AP. Therefore, all three data interaction manners, namely, a SIM card manner, an SD card manner, and an all-terminal manner, can be implemented on the same mobile terminal.

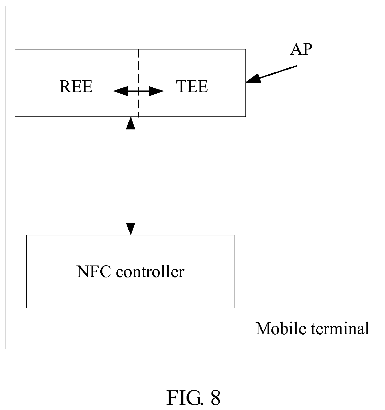

Referring to FIG. 8, FIG. 8 is a schematic framework diagram of still another mobile terminal according to an embodiment of the present invention. A software system running on an AP has two operating modes. One is a security mode, in which only a trusted instruction can be executed, and the security mode is referred to as a TEE environment. The other is an insecurity mode (or normal mode), in which a rich instruction can be executed, and the insecurity mode is referred to as an REE (Rich Execution Environment) environment. Both modes are integrated on a core. Switching between the two modes can be simply implemented according to different requirements.

After the NFC controller receives the AID selection command that is used for initiating the NFC service and that is sent by the NFC card reader, the NFC controller sends the AID selection command to the AP running in the TEE environment. The AP obtains a target AID included in the AID selection command, and determines an application corresponding to the target AID.

If the target AID is registered as an HCE (Host-based Card Emulation, host-based card emulation) application program, and the HCE application program runs in the REE environment of the AP, the AP searches the AID routing table to determine a fourth destination address corresponding to the HCE application program, switches from the TEE environment to the REE environment, and establishes a fourth link between the TEE environment and the REE environment. The AP sends the received AID selection command and subsequent service data to the HCE application program by using the fourth link, until the AP receives a new AID selection command.

According to the mobile terminal provided in this embodiment, after the AP running in the TEE environment determines that the target AID is the HCE application program, the AP switches from the TEE environment to the REE environment, and sends the AID selection command and the subsequent service data to the HCE application program in the REE environment by using the fourth link between the TEE environment and the REE environment, so as to complete an NFC non-contact service between the HCE application program in the mobile terminal and the NFC card reader.

The embodiments in this specification are all described in a progressive manner, for same or similar parts in the embodiments, reference may be made to these embodiments, and each embodiment focuses on a difference from other embodiments. Especially, apparatus or system embodiments are basically similar to a method embodiment, and therefore are described briefly; for related parts, reference may be made to partial descriptions in the method embodiment. The described apparatus and system embodiments are merely examples. The units described as separate parts may or may not be physically separate, and parts displayed as units may or may not be physical units, may be located in one position, or may be distributed on a plurality of network units. Some or all of the modules may be selected according to an actual requirement, to achieve the objectives of the solutions of the embodiments. A person of ordinary skill in the art may understand and implement the embodiments of the present invention without creative efforts.

The foregoing descriptions are merely specific implementations of the present invention. It should be noted that a person of ordinary skill in the art may make several improvements or polishing without departing from the principle of the present invention and the improvements or polishing shall fall within the protection scope of the present invention.

## Claims

1. A near field communication method, wherein the method is applied to a mobile terminal, and the mobile terminal comprises an application processor AP, a near field communication NFC controller, and a secure element SE, wherein the NFC controller is coupled to the AP, the SE is coupled to the AP, and an operating mode of the AP comprises a security mode; and the method comprises:
receiving, by the NFC controller, an application identifier AID selection command that is used for initiating an NFC service, and forwarding the AID selection command to the AP, wherein the AID selection command carries a target AID;
parsing, by the AP, the AID selection command to obtain the target AID, and searching an AID routing table prestored in a storage space corresponding to the security mode of the AP, to obtain a first destination address corresponding to the target AID, wherein the AID routing table comprises a one-to-one correspondence between at least one AID and at least one destination address;
when an object corresponding to the first destination address is the SE, establishing, by the AP, a first link between the AP and the SE;
receiving, by the NFC controller, at least one piece of service data corresponding to the NFC service, and sending the at least one piece of service data to the AP; and
sending, by the AP, the at least one piece of service data to the SE by using the first link.

2. The method according to claim 1, wherein if the SE and the AP are integrated on a system-on-a-chip, the establishing, by the AP, a first link between the AP and the SE specifically comprises:
establishing, by the AP, the first link, based on an interprocess communication IPC bus.

3. The method according to claim 1, wherein if the SE and the AP are not integrated on a same system-on-a-chip, the establishing, by the AP, a first link between the AP and the SE specifically comprises:
establishing, by the AP, the first link, based on a serial peripheral interface SPI bus.

4. The method according to any one of claims 1 to 3, wherein the mobile terminal further comprises a subscriber identity module SIM card, and the method further comprises:
if the object corresponding to the first destination address is the SIM card, establishing, by the AP, a second link between the AP and the SIM card, and sending the at least one piece of service data to the SIM card by using the second link.

5. The method according to any one of claims 1 to 3, wherein the terminal further comprises a secure digital SD card, and the method further comprises:
if the object corresponding to the first destination address is the SD card, establishing, by the AP, a third link between the AP and the SD card, and sending the at least one piece of service data to the SD card by using the third link.

6. The method according to any one of claims 1 to 3, wherein the operating mode of the AP further comprises an insecurity mode, and the method further comprises:
if the object corresponding to the first destination address is an NFC card emulation application program when the AP runs in the insecurity mode, establishing, by the AP, a fourth link between the AP and the NFC card emulation application program, and sending the at least one piece of service data to the NFC card emulation application program by using the fourth link.

7. A mobile terminal, comprising an application processor AP, a near field communication NFC controller, and a secure element SE, wherein the NFC controller is coupled to the AP, the SE is coupled to the AP, an operating mode of the AP comprises a security mode, an application identifier AID routing table is prestored in a storage space corresponding to the security mode of the AP, and the AID routing table comprises a one-to-one correspondence between at least one AID and at least one destination address;
the NFC controller is configured to: receive an AID selection command used for initiating an NFC service, and send the AID selection command to the AP, wherein the AID selection command carries a target AID;
the AP is configured to: parse the AID selection command to obtain the target AID, and search the AID routing table to obtain a first destination address corresponding to the target AID; and if an object corresponding to the first destination address is the SE, the AP establishes a first link between the AP and the SE;
the NFC controller is further configured to: receive at least one piece of service data corresponding to the NFC service, and send the at least one piece of service data to the AP; and
the AP is further configured to send the at least one piece of service data to the SE by using the first link.

8. The mobile terminal according to claim 7, wherein if the SE and the AP are integrated on a system-on-a-chip, when the AP is configured to establish the first link between the AP and the SE, the AP is specifically configured to establish the first link, based on an interprocess communication IPC bus.

9. The mobile terminal according to claim 7, wherein if the SE and the AP are not integrated on a same system-on-a-chip, when the AP is configured to establish the first link between the AP and the SE, the AP is specifically configured to establish the first link, based on a serial peripheral interface SPI bus between the AP and the SE.

10. The mobile terminal according to any one of claims 7 to 9, wherein the mobile terminal further comprises a subscriber identity module SIM card, and if the object corresponding to the first destination address is the subscriber identity module SIM card, the AP is further configured to:
establish a second link between the AP and the SIM card, and send the at least one piece of service data to the SIM card by using the second link.

11. The mobile terminal according to any one of claims 7 to 9, wherein the mobile terminal further comprises a secure digital SD card, and if the object corresponding to the first destination address is the secure digital SD card, the AP is further configured to:
establish a third link between the AP and the SD card, and send the at least one piece of service data to the SD card by using the third link.

12. The mobile terminal according to any one of claims 7 to 9, wherein the operating mode of the AP further comprises an insecurity mode, and if the object corresponding to the first destination address is an NFC card emulation application program when the AP runs in the insecurity mode, the AP is further configured to:
establish a fourth link between the AP and the NFC card emulation application program, and send at least one piece of service data to the NFC card emulation application program by using the fourth link.
